# EUROPEAN PATENT APPLICATION

(11) **EP 4 603 425 A1**
(43) Date of publication of application: **20.08.2025**
(21) Application number: 23955010.6
(22) Date of filing: 27.11.2023
(51) Int. Cl.: B65G 37/02

(54) **CONVEYING SYSTEM, CONVEYING METHOD, AND BATTERY PRODUCTION LINE**

(30) Priority: 13.10.2023 CN 202311323163
(71) Applicant: Contemporary Amperex Technology (Hong Kong) Limited, Central (HK)
(72) Inventor: QIU, Shiping, Ningde, Fujian 352100 (CN)
(74) Representative: Gong, Jinping
(86) International application number: PCT/CN2023/134441
(87) International publication number: WO 2025/076937

(57) **Abstract**

This disclosure discloses a conveying system, a conveying method, and a battery production line. The conveying system includes: a reflow box, located between a workpiece conveying line and a pallet conveying line, where the reflow box has an upper space and a lower space, a reflow conveying apparatus configured to return a pallet to the pallet conveying line is arranged in the lower space, the workpiece conveying line is configured to convey a first workpiece, the pallet conveying line is configured to convey the pallet, and the pallet is configured to carry a second workpiece; a pallet conveying branch line, connecting the pallet conveying line and the reflow conveying apparatus, where the pallet conveying branch line is configured to enable the pallet conveyed by the pallet conveying line to flow through a processing apparatus, and the processing apparatus is configured to process the first workpiece into the second workpiece; and a grasping and placing apparatus, placed in the upper space of the reflow box, and configured to grasp the first workpiece from the workpiece conveying line and place the first workpiece onto the pallet in the pallet conveying branch line, for processing by the processing apparatus.

## Description

### CROSS-REFERENCE TO RELATED APPLICATIONS

This disclosure is based upon and claims priority to Chinese Patent Application No. 202311323163.9, filed on October 13, 2023 and entitled "CONVEYING SYSTEM, CONVEYING METHOD, AND BATTERY PRODUCTION LINE", which is incorporated herein by reference in its entirety.

### TECHNICAL FIELD

This disclosure relates to the field of battery manufacturing technologies, and in particular, to a conveying system, a conveying method, and a battery production line.

### BACKGROUND

New energy batteries are more and more widely applied to life and industry, for example, new energy vehicles equipped with batteries have been widely used. In addition, batteries are more and more applied to the field of energy storage and the like.

During production and manufacturing of the batteries, the batteries usually need to be conveyed by a conveying system, so that the batteries can be circulated among various processes to perform different processing operations. In the development of battery manufacturing technology, in addition to improving the performance of the batteries, the improvement of the production efficiency is also one of the goals that industry continues to pursue, and impact of the conveying efficiency of the batteries on the production efficiency and the like cannot be ignored. Therefore, how to improve the conveying efficiency of the batteries is one of research topics in the industry.

### SUMMARY

To solve the foregoing technical problems, this disclosure provides a conveying system with high conveying efficiency and a simple structure, a conveying method with high conveying efficiency, and a battery production line.

This disclosure is implemented by the following technical scheme.

A first aspect of this disclosure provides a conveying system. The conveying system is configured to convey and circulate workpieces. The conveying system includes a reflow box, located between a workpiece conveying line and a pallet conveying line, where the reflow box has an upper space and a lower space, a reflow conveying apparatus configured to return a pallet to the pallet conveying line is provided in the lower space, the workpiece conveying line is configured to convey a first workpiece, the pallet conveying line is configured to convey the pallet, and the pallet is configured to carry a second workpiece; a pallet conveying branch line, connecting the pallet conveying line and the reflow conveying apparatus, where the pallet conveying branch line is configured to enable the pallet conveyed by the pallet conveying line to flow through a processing apparatus, and the processing apparatus is configured to process the first workpiece into the second workpiece; and a grasping and placing apparatus, placed in the upper space of the reflow box and configured to grasp the first workpiece from the workpiece conveying line and place the first workpiece onto the pallet in the pallet conveying branch line, for processing by the processing apparatus.

The conveying system includes a reflow box located between the workpiece conveying line and the pallet conveying line, and the upper space of the reflow box is provided with a grasping and placing apparatus for grasping the first workpiece from the workpiece conveying line, and the lower space is provided with a reflow conveying apparatus for reflowing the pallet carrying the processed second workpiece, so that the conveying of the first workpiece and the reflow of the pallet carrying the second workpiece can be simultaneously performed with a simple structure and simple actions, thereby improving the rhythm of a production line, accelerating the conveying efficiency, improving the productivity, improving the production efficiency, and reducing the production cost. Moreover, the reflow box has the upper space and the lower space, so that the workpiece can be conveyed and the pallet can be circulated synchronously in a vertical direction in the space, which helps improve the space utilization rate.

In addition, the second workpiece processed by the processing apparatus is carried on the pallet, so that the second workpiece can be circulated out of the processing apparatus and enter the conveying line through the pallet directly without passing through the grasping and placing apparatus, which simplifies devices of the production line, reduces control steps, and further improves the production efficiency. Moreover, the processed second workpiece is circulated through the pallet, which is beneficial to maintaining the shape of the processed second workpiece.

In some embodiments, the pallet conveying branch line conveys the pallet in a first direction. The reflow conveying apparatus conveys the pallet in a second direction intersecting with the first direction.

A direction for conveying the pallet in the pallet conveying branch line crosses a direction for conveying the pallet in the reflow conveying apparatus, so that the conveying system does not need to occupy too long space in the first direction, a layout of various modules of a component segment in the production line is not limited to a linear layout in a plane, but can be combined with layouts such as a U-turn, an upper layer, and a lower layer to improve the speed of the device and the layout flexibility, which helps improve the space utilization rate and the production efficiency, and is also beneficial to miniaturization and integration of the conveying system.

In some embodiments, the reflow box includes a frame body and a support surface provided on the frame body, the grasping and placing apparatus is arranged on the support surface and located in the upper space above the support surface, and the reflow conveying apparatus is arranged in the frame body and located in the lower space below the support surface.

Therefore, a structure of the reflow box can be defined by the frame body and the support surface in a simple structure, and the upper space and the lower space can be divided, so that the upper space and the lower space of the reflow box can be fully utilized to realize the conveying of the workpiece and the reflow of the pallet, and the conveying efficiency and the space utilization rate are improved.

In some embodiments, the reflow conveying apparatus includes an elevator and a reflow conveying line. The elevator can be driven by a jacking apparatus to ascend or descend in a third direction intersecting with both the first direction and the second direction. The elevator is configured to transfer the pallet from the pallet conveying branch line to the reflow conveying line. The pallet conveying branch line is located above the reflow conveying line.

Therefore, the pallet can be stably circulated from the pallet conveying branch line to the reflow conveying line through the elevator, so that the pallet carrying the second workpiece can be separated from the processing apparatus and reflowed to the pallet conveying line through the reflow conveying line, which reduces undesirable situations such as moving and falling of the second workpiece carried on the pallet due to accidental interference with the processing apparatus during reflowing of the pallet.

In some embodiments, the intersecting includes vertical intersecting.

Therefore, the first workpiece or the pallet carrying the second workpiece can be conveyed in three vertical directions in the space, which helps improve the conveying efficiency and the space utilization rate.

In some embodiments, two pallet conveying branch lines are provided, and the two pallet conveying branch lines are connected in parallel between the pallet conveying line and the reflow conveying apparatus.

Therefore, the pallets can be conveyed to flow through the processing apparatus through the two pallet conveying branch lines which are mutually matched in the action sequence, so that the conveying efficiency is further improved, the production speed is accelerated, and the production efficiency is further improved.

In some embodiments, the grasping and placing apparatus includes a manipulator. The manipulator is configured to grasp at least one first workpiece from the workpiece conveying line and place the first workpiece onto the pallet in the pallet conveying branch line in a specified orientation.

Therefore, the first workpiece can be automatically placed in the pallet in the pallet conveying branch line through the manipulator, which reduces the labor cost and improves the automation degree of the conveying system.

In some embodiments, the processing apparatus includes a stacking apparatus configured to align and stack the first workpieces to form the second workpiece.

Therefore, the first workpieces can be conveyed to the processing apparatus through the conveying system, for aligning and stacking to form neatly arranged second workpieces, and the neatly arranged second workpieces can be continuously conveyed to a next process through the conveying system, so that conveying and rapid alignment of the plurality of first workpieces and subsequent circulation of the second workpieces can be achieved in an automatic and simple manner, the labor costs are reduced, and the stacking efficiency is improved.

In some embodiments, the first workpiece includes at least any one of a battery and a battery unit formed by combining at least two batteries, and the second workpiece includes at least any one of a battery queue and a battery unit queue.

Therefore, the conveying system can convey the batteries or the battery units to the processing apparatus to stack the batteries and the battery units into a battery queue or a battery unit queue. Once the battery queue or the battery unit queue is stacked, the battery queue or the battery unit queue can be quickly conveyed away by using the pallet to form a battery module in the subsequent process, so that the battery production rhythm can be accelerated and various types of battery modules can be continuously produced.

A second aspect of this disclosure provides a conveying method, which conveys and circulates workpieces by using a conveying system. The conveying system includes a reflow box, a pallet conveying branch line, and a grasping and placing apparatus. The reflow box is located between the workpiece conveying line and the pallet conveying line and is provided with a reflow conveying apparatus in a lower space. The pallet conveying branch line is connected with the pallet conveying line and the reflow conveying apparatus, and the grasping and placing apparatus is placed in an upper space of the reflow box. The conveying method includes: enabling a pallet to flow from the pallet conveying line into the pallet conveying branch line and to flow through a processing apparatus, where the processing apparatus is configured to process a first workpiece into a second workpiece; grasping the first workpiece from the workpiece conveying line by using the grasping and placing apparatus and placing the first workpiece onto the pallet in the pallet conveying branch line, for processing by the processing apparatus; enabling the pallet carrying the second workpiece to flow into the reflow conveying apparatus from the pallet conveying branch line; and enabling the pallet via the reflow conveying apparatus to reflow to the pallet conveying line.

Therefore, the workpiece can be conveyed and the pallet can be reflowed efficiently in a simple and automatic way by using the conveying system, which helps improve the conveying efficiency and the space utilization rate, so that the production efficiency can be effectively improved and the production cost can be reduced. Moreover, a process of transferring the pallet or the second workpiece by using a gripper and the like is omitted, which is beneficial to simplifying an action process.

In some embodiments, the reflow conveying apparatus includes an elevator and a reflow conveying line. The step of enabling the pallet carrying the second workpiece to flow into the reflow conveying apparatus from the pallet conveying branch line includes: enabling the elevator to jack up in a third direction; enabling the pallet carrying the second workpiece to flow out from the pallet conveying branch line and to be carried on the elevator in a jack-up state; and descending the elevator, where the elevator transfers the pallet carrying the second workpiece to the reflow conveying line.

Therefore, the pallet carrying the second workpiece processed by the processing apparatus can be transferred to the reflow conveying line through the elevator, and then reflows into the pallet conveying line through the reflow conveying line, which is convenient for the reflowed pallet to be separated from the processing apparatus, and reduces undesirable situations such as moving and falling of the second workpiece carried on the pallet due to accidental interference with the processing apparatus during reflowing of the pallet.

In some embodiments, the first workpiece includes at least any one of a battery and a battery unit formed by combining at least two batteries. The second workpiece includes at least any one of a battery queue and a battery unit queue. The processing apparatus includes a stacking apparatus configured to align and stack the first workpieces to form the second workpiece.

Therefore, the conveying method using the conveying system can be used for conveying the batteries to the stacking apparatus, and after the batteries are aligned and stacked by the stacking apparatus to form a neat battery queue, the batteries are circulated out of the stacking apparatus. Moreover, the batteries can be conveyed and the pallet carrying the aligned and stacked battery queue can be reflowed simultaneously, thereby improving the conveying efficiency and improving the production efficiency of grouping batteries.

A third aspect of this disclosure provides a battery production line. The battery production line includes a pallet conveying line, a workpiece conveying line, and the conveying system according to the first aspect of this disclosure. The processing apparatus includes a stacking apparatus.

Therefore, the conveying connection between the pallet conveying line, the workpiece conveying line, and the processing apparatus can be rapidly achieved in a simple and automatic way, which helps improve the conveying efficiency, further improving the production efficiency of the stacking apparatus and even the whole battery production line, and improving the space utilization rate.

The embodiments of this disclosure have the following beneficial effects:

Through this disclosure, a conveying system with high conveying efficiency and simple structure, a conveying method with high conveying efficiency, and a battery production line are provided.

### BRIEF DESCRIPTION OF DRAWING

Persons of ordinary skill in the art will be clear about various other advantages and benefits by reading the detailed description of the preferred embodiments below. Accompanying drawings are only for the purpose of illustrating preferred embodiments, and are not considered as limiting this disclosure. Moreover, throughout the accompanying drawings, the same reference signs represent the same parts. In the accompanying drawings:
FIG. 1 is a schematic diagram of a three-dimensional structure of a conveying system according to some embodiments of this disclosure in a working state;
FIG. 2 is a schematic diagram of a partial three-dimensional structure of a conveying system according to some embodiments of this disclosure;
FIG. 3 is a schematic diagram of a three-dimensional structure of the reflow conveying apparatus according to some embodiments of this disclosure;
FIG. 4 is a schematic diagram of a three-dimensional exploded structure of the elevator according to some embodiments of this disclosure;
FIG. 5 is a schematic plane view of a first workpiece grasped by a grasping and placing apparatus in a conveying system according to some embodiments of this disclosure;
FIG. 6 is a schematic plane view of a second workpiece carried by a pallet in a conveying system according to some embodiments of this disclosure;
FIG. 7 is a schematic flowchart of a conveying method according to some embodiments of this disclosure; and
FIG. 8 is another schematic flowchart of the conveying method according to some embodiments of this disclosure.

### Reference signs are described as follows:

1: reflow box; 11: upper space; 12: lower space; 13: support surface; 14: frame body; 2: pallet conveying branch line; 3: grasping and placing apparatus; 4: workpiece conveying line; 5: pallet conveying line; 6: pallet; 7: reflow conveying apparatus; 71: elevator; 711: jacking apparatus; 712: support plate; 713: elevator mounting frame; 714: elevator support; 715: elevator conveyor belt; 716: driving shaft; 72: reflow conveying line; 73: stopper; 74: reflow base; 75: buffer; 8: processing apparatus; 10: first workpiece; 20: second workpiece; and 100: conveying system.

### DESCRIPTION OF EMBODIMENTS

Hereinafter, embodiments of the technical scheme of this disclosure will be described in detail with reference to the accompanying drawings. The following examples are only used to more clearly illustrate the technical scheme of this disclosure, so they are only used as examples, and cannot be used to limit the protection scope of this disclosure.

Unless otherwise defined, all technical and scientific terms used herein have the same meaning as commonly understood by those skilled in the TECHNICAL FIELD of this disclosure. The terms used herein are for the purpose of describing specific embodiments only and are not intended to limit this disclosure. Terms "including" and "having" and any variations thereof in this disclosure are intended to cover non-exclusive inclusion.

In the description of the embodiments of this disclosure, technical terms "first", "second", and "third" are only used to distinguish different objects, and cannot be understood as indicating or implying relative importance or implicitly indicating a quantity, specific order, or a primary-secondary relationship of indicated technical features. In the description of the embodiments of this disclosure, "plural" means at least two, unless otherwise specifically defined.

Reference to "an embodiment" herein means that a particular feature, structure or characteristic described in connection with the embodiment can be included in at least one embodiment of this disclosure. This phrase appearing in various places in this specification does not necessarily refer to the same embodiment or an independent or alternative embodiment that is exclusive of other embodiments. Persons skilled in the art explicitly and implicitly understand that the embodiments described herein may be combined with other embodiments.

In the description of the embodiments of this disclosure, a term "and/or" is only an associative relationship for describing associated objects, indicating that three relationships may be present. For example, A and/or B may indicate the following three cases: presence of only A, presence of both A and B, and presence of only B. In addition, a character "/" in this specification generally indicates an "or" relationship between contextually associated objects.

In descriptions of the embodiments of this disclosure, orientations or positional relationships indicated by technical terms "length", "width", "thickness", "upper", "lower", "front", "rear", "left", "right", "vertical", "horizontal", "top", "bottom", "inner", "outer", "circumferential", and the like are the orientations or positional relationships shown based on the accompanying drawings, and are merely for the convenience of describing the embodiments of this disclosure and simplifying the descriptions, rather than indicating or implying that apparatuses or elements referred to need to have particular orientations, and constructed and operated in particular orientations. Therefore, it cannot be construed as a limitation to the embodiments of this disclosure.

In the description of the embodiments of this disclosure, unless otherwise specified and defined explicitly, the technical terms "mounting", "interconnection", "connection", and "fastening" will be broadly understood. For example, they may refer to a fixed connection, a detachable connection, or an integral connection, may refer to a mechanical connection or an electrical connection, and may refer to a direct connection, an indirect connection via an intermediate medium, communication in two elements, or an interaction between two elements. For those of ordinary skill in the art, specific meanings of the foregoing terms in the embodiments of this disclosure may be understood according to specific conditions.

In the description of the embodiments of this disclosure, unless otherwise specified and limited, technical term "contact" will be broadly understood, which may be direct contact, contact through an intermediate medium layer, contact with no interaction force between the two in contact, or contact with interaction force between the two in contact.

This disclosure will be described below in detail.

At present, new energy batteries are more and more widely used in life and industry. New energy batteries are not only applied to energy storage power supply systems such as hydroelectric power plants, thermal power plants, wind power plants, and solar power plants, but also widely applied to a plurality of fields such as electric transportation tools such as electric bicycles, electric motorcycles, electric vehicles, and aerospace. With continuous expansion of application fields of power batteries, market demands for the power batteries are also increasing.

During battery production and manufacturing, various conveying lines or processes need to be connected through a conveying system to convey a battery, so that the battery can circulate between various conveying lines and processes for different processing operations. The conveying system occupies a large space in a battery production line, and the conveying efficiency of the conveying system greatly affects the production and manufacturing efficiency of the battery. Therefore, improving the conveying efficiency of the conveying system is helpful to improve the production rhythm of the battery production line, can effectively improve the production efficiency of the battery production line, and is helpful to reduce the production cost. In addition, reducing a size of the space occupied by the conveying system can effectively improve the space utilization rate of factories, workshops, and the like.

An existing conveying system is usually arranged in a straight line in the same direction on the ground, and various processes or conveying lines are linearly connected in sequence. Therefore, it is usually necessary to perform processing by a next module after one module completes processing, which has low conveying efficiency, slow production rhythm, and is not beneficial to improving the space utilization rate.

For problems existing in related technologies mentioned above, this disclosure provides a conveying system. The conveying system is configured to convey and circulate workpieces. The conveying system includes a reflow box, a pallet conveying branch line, and a grasping and placing apparatus. The reflow box is located between the workpiece conveying line and the pallet conveying line, and has an upper space and a lower space. A reflow conveying apparatus configured to return a pallet to the pallet conveying line is provided in the lower space. The workpiece conveying line is configured to convey a first workpiece. The pallet conveying line is configured to convey the pallet. The pallet is configured to carry a second workpiece. The pallet conveying branch line is connected with the pallet conveying line and the reflow conveying apparatus, and the pallet conveying branch line configured to enable the pallet conveyed by the pallet conveying line to flow through a processing apparatus. The processing apparatus is configured to process the first workpiece into the second workpiece. The grasping and placing apparatus is placed in the upper space of the reflow box and is configured to grasp the first workpiece from the workpiece conveying line and place the first workpiece onto the pallet in the pallet conveying branch line, for processing by the processing apparatus.

The conveying system according to the embodiments of this disclosure can perform conveying of the workpiece and the reflow of the pallet can be simultaneously with a simple structure and simple actions, thereby improving the speed of a production line, accelerating the conveying efficiency, improving the productivity, improving the production efficiency, and reducing the production cost. Moreover, the reflow box has the upper space and the lower space, so that the workpiece can be conveyed and the pallet can be circulated synchronously in a vertical direction in the space, which helps improve the space utilization rate.

The conveying system of the embodiments of this disclosure can be configured for, for example, conveying and circulating in a process of aligning and stacking batteries or battery units, in a production process of the batteries. Certainly, it should be understood by those skilled in the art that the conveying system according to the embodiments of this disclosure is not only configured to convey and circulate various workpieces during production and manufacturing of the batteries, but also configured to convey and circulate other workpieces that need to be conveyed and circulated in other production lines.

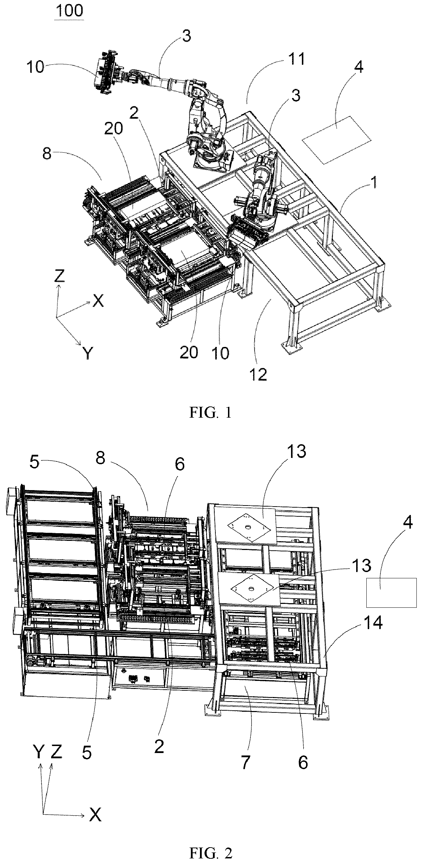

Hereinafter, some embodiments of this disclosure will be described in detail with reference to FIG. 1 to FIG. 8.

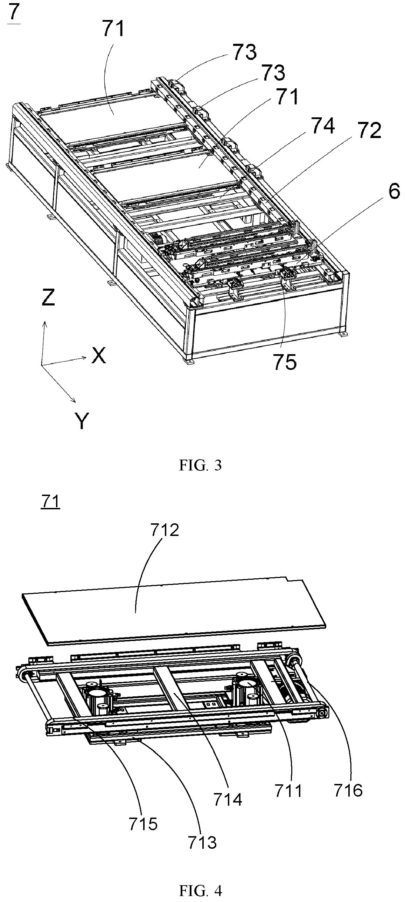

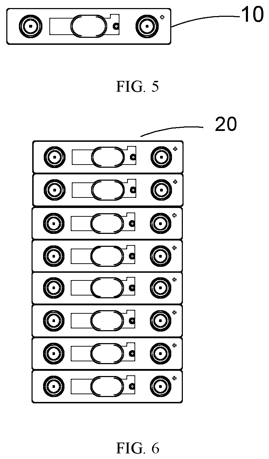

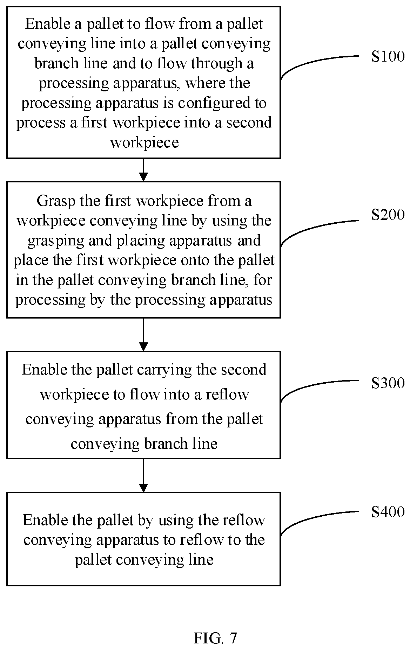

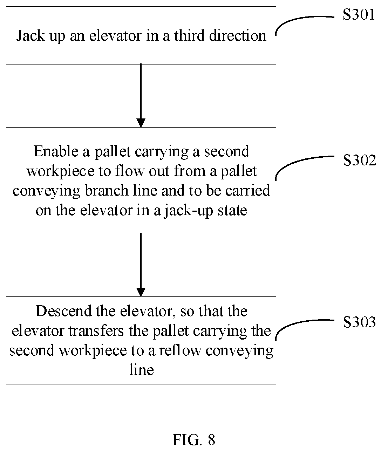

FIG. 1 is a schematic diagram of a three-dimensional structure of a conveying system according to some embodiments of this disclosure in a working state. FIG. 2 is a schematic diagram of a partial three-dimensional structure of a conveying system according to some embodiments of this disclosure. FIG. 3 is a schematic diagram of a three-dimensional structure of the reflow conveying apparatus according to some embodiments of this disclosure. FIG. 4 is a schematic diagram of a three-dimensional exploded structure of the elevator according to some embodiments of this disclosure. FIG. 5 is a schematic plane view of a first workpiece grasped by a grasping and placing apparatus in a conveying system according to some embodiments of this disclosure. FIG. 6 is a schematic plane view of a second workpiece carried by a pallet in a conveying system according to some embodiments of this disclosure. FIG. 7 is a schematic flowchart of a conveying method according to some embodiments of this disclosure. FIG. 8 is another schematic flowchart of the conveying method according to some embodiments of this disclosure.

In some embodiments of this disclosure, for convenience of explanation, a first direction, a second direction, a third direction are set, and the first direction, the second direction, and the third direction are directions that cross each other, and here, intersecting each other includes intersecting each other vertically. For the convenience of understanding the embodiments of this disclosure, in the embodiments shown in FIG. 1 to FIG. 8, take an example in which the first direction, the second direction, and the third direction are directions that cross each other vertically for explanation, but it should be understood by those skilled in the art that the embodiments of this disclosure are not limited to a case where the three directions cross each other vertically. For convenience of explanation, as shown by arrows in FIG. 1 to FIG. 3, a direction shown by an arrow X is the first direction, a direction shown by an arrow Y is the second direction, and a direction shown by an arrow Z is the third direction. Sometimes, a direction pointed by the arrow Z in the third direction is referred to as "above", and an opposite direction is referred to as "below".

As shown in FIG. 1 and FIG. 2, a first aspect of this disclosure provides a conveying system 100. The conveying system 100 is configured to convey and circulate workpieces. The conveying system 100 includes a reflow box 1, a pallet conveying branch line 2, and a grasping and placing apparatus 3. The reflow box 1 is located between a workpiece conveying line 4 and a pallet conveying line 5. The reflow box 1 has an upper space 11 and a lower space 12. A reflow conveying apparatus 7 configured to return a pallet 6 to the pallet conveying line 5 is arranged in the lower space 12. The workpiece conveying line 4 is configured to convey a first workpiece 10. The pallet conveying line 5 is configured to convey the pallet 6. The pallet 6 is configured to carry a second workpiece 20. The pallet conveying branch line 2 is connected with the pallet conveying line 5 and the reflow conveying apparatus 7. The pallet conveying branch line 2 is configured to enable the pallet 6 conveyed by the pallet conveying line 5 to flow through a processing apparatus 8. The processing apparatus 8 is configured to process the first workpiece 10 into the second workpiece 20. The grasping and placing apparatus 3 is placed in the upper space 11 of the reflow box 1 and is configured to grasp the first workpiece 10 from the workpiece conveying line 4 and place the first workpiece 10 onto the pallet 6 in the pallet conveying branch line 2, for processing by the processing apparatus 8.

During production and manufacturing of products such as batteries, various conveying lines or processes usually need to be connected through a conveying system to convey a battery, so that the battery can circulate between various conveying lines and processes for different processing operations. The conveying system 100 according to the embodiments of this disclosure is a system that can connect the battery conveying line, the pallet conveying line 5, and a stacking apparatus, and can simultaneously convey the batteries among between battery conveying line, the pallet conveying line 5, and the stacking apparatus and reflow the pallet 6 carrying a processed battery queue.

In the embodiments of this disclosure, a workpiece includes a first workpiece 10 and a second workpiece 20. The first workpiece 10 can be processed into a second workpiece 20 by the processing apparatus 8. As shown in FIG. 5 and FIG. 6, the first workpiece 10 may be, for example, a battery, a battery unit formed by combining at least two batteries, or the like. The second workpiece 20 may be, for example, a neat battery queue formed by aligning and stacking a plurality of batteries or a plurality of battery units. Certainly, in some other embodiments, the first workpiece 10 may alternatively be any other workpiece to be conveyed, and the second workpiece 20 may alternatively be a workpiece obtained, by the processing apparatus 8, by processing any other workpiece to be conveyed.

In the embodiments of this disclosure, the processing apparatus 8 may be, for example, a stacking apparatus. In some other embodiments, the processing apparatus 8 may alternatively be any other processing apparatus such as a pre-stacking apparatus and a pressurizing apparatus. In some embodiments of this disclosure, take an example in which the processing apparatus 8 is the stacking apparatus for explanation. Here, the stacking apparatus includes an apparatus for arranging and shaping a plurality of workpieces or workpiece units into a neatly arranged queue.

The first workpiece 10 may be a square battery shown in FIG. 5. The second workpiece 20 may be a workpiece queue in which a plurality of batteries shown in FIG. 6 are stacked and arranged in such a manner that largest sides of the batteries face each other. Certainly, the first workpiece 10 may alternatively be a battery unit formed by a plurality of (for example, 2, 3, or 4) batteries shown in FIG. 5 in manners such as bonding. The second workpiece 20 may be a workpiece queue formed by stacking these battery units. Manners of combining at least two batteries are not limited to bonding, and may be other manners such as mechanical connection.

In the embodiments of this disclosure, the battery may be a battery cell.

The battery cell refers to a basic unit that can realize mutual conversion between chemical energy and electric energy, and may be configured to make a battery module or a battery pack, so as to supply power to electric apparatuses.

The battery cell may be a secondary battery, and the secondary battery refers to a battery cell that can activate an active material in a manner of charging and continue to be used after the battery cell is discharged.

The battery cell may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, a lead storage battery, and the like. This is not limited in the embodiments of this disclosure.

Although not shown, the battery cell generally includes an electrode assembly. The electrode assembly includes a positive electrode, a negative electrode, and a separator. During charging and discharging of the battery cell, active ions (such as lithium ions) intercalate and deintercalate back and forth between the positive electrode and the negative electrode. The separator is arranged between the positive electrode and the negative electrode to prevent short circuit of the positive electrode and the negative electrode and to allow the active ions to pass through.

In some embodiments, the battery cell further includes an electrolyte. The electrolyte plays a role of conducting ions between the positive electrode and the negative electrode. Types of electrolytes are not specifically limited in this disclosure, which may be selected according to requirements. The electrolyte can be liquid, gel, or solid.

In some embodiments, the battery cell may include a housing. The housing is configured to encapsulate components such as the electrode assembly and the electrolyte. The housing may be a steel housing, an aluminum housing, a plastic housing (for example, polypropylene), a composite metal housing (for example, a copper-aluminum composite housing), an aluminum-plastic film, or the like.

As an example, the battery cell may be a cylindrical battery cell, a prismatic battery cell, a pouch battery cell, or a battery cell in another shape. The prismatic battery cell includes a square shell battery cell, a blade battery cell, and a polygonal battery. The polygonal battery is, for example, a hexagonal battery. This is not particularly limited in this disclosure.

In some embodiments, the housing includes an end cover and a shell. The shell is provided with an opening. The end cover closes the opening to form a closed space for accommodating the electrode assembly and substances such as the electrolyte. The shell may be provided with one or more openings. One or more end covers may be arranged.

In some embodiments, at least one electrode terminal is arranged on the housing, and the electrode terminal is electrically connected with a tab. The electrode terminal may be directly connected to the tab or indirectly connected to the tab through an adapter. The electrode terminal may be arranged on the end cover or may be arranged on the shell.

In some embodiments, a pressure relief mechanism is arranged on the housing. The pressure relief mechanism is configured to release an internal pressure of the battery cell.

In the embodiments of this disclosure, the battery may alternatively be a single physical module including one or more battery cells to provide higher voltage and capacity. When a plurality of battery cells are provided, the plurality of battery cells are in series connection, parallel connection, or series-parallel connection to each other through a busbar component.

A conveying system 100 according to the embodiments of this disclosure will be described below with reference to the accompanying drawings. As shown in FIG. 1 and FIG. 2, the conveying system 100 includes a reflow box 1, a pallet conveying branch line 2, and a grasping and placing apparatus 3.

The reflow box 1 is located between a workpiece conveying line 4 and a pallet conveying line 5. The workpiece conveying line 4 is configured to convey a first workpiece 10. The pallet conveying line 5 is configured to convey a pallet 6.

For example, the workpiece conveying line 4 may convey the first workpiece 10 processed by one or more other processes. During manufacturing of batteries, if the processing apparatus 8 is configured to group batteries, a manufactured battery or battery unit may be conveyed by the workpiece conveying line 4.

For another example, the workpiece conveying line 4 may alternatively convey the first workpiece 10 that is fed to a transfer table or temporarily stored in the transfer table via a feeding apparatus.

The pallet conveying line 5 may convey an empty pallet 6 or a pallet 6 carrying a second workpiece 20, for example, a pallet 6 carrying the second workpiece 20 processed by a processing apparatus 8. Certainly, the pallet conveying line 5 may alternatively convey the pallet carrying an unqualified product to a specified place.

The pallet 6 may hold workpieces, and the pallet 6 circulating on the pallet conveying line 5 is mainly configured to hold the second workpiece 20. The pallet 6 at least includes a bottom plate, and some pallets 6 may alternatively include side plates that can be ascended or descended. In addition, the pallet 6 may alternatively include a structure for clamping and positioning the workpiece. A structure of the pallet 6 is not specifically limited in the embodiments of this disclosure, as long as the pallet can hold the workpiece and is suitable for circulating on the pallet conveying line 5 and the pallet conveying branch line 2 (described later).

As shown in FIG. 2, the pallet conveying line 5 may be provided near the processing apparatus 8, for example, on two adjacent sides of the processing apparatus 8 respectively, and generally in a form of surrounding the processing apparatus 8 on two sides. Furthermore, the pallet conveying line 5 may be connected to the reflow conveying apparatus 7 via the pallet conveying branch line 2. The conveying system 100 may control the empty pallet 6 conveyed on the pallet conveying line 5 to flow into the processing apparatus 8 through the pallet conveying branch line 2. The first workpiece 10 is grasped from the workpiece conveying line 4 by the grasping and placing apparatus 3 and is placed in the empty pallet 6 in the pallet conveying branch line 2, for processing by the processing apparatus 8. During processing of the first workpiece 10 by the processing apparatus 8, the pallet 6 does not move relative to the pallet conveying branch line 2, for example, the pallet 6 may be temporarily separated from the pallet conveying branch line 2 through a jacking apparatus. After the processing is completed, the pallet 6 carrying the processed second workpiece 20 flows into the reflow conveying apparatus 7 and may continue to reflow to the pallet conveying line 5 via the reflow conveying apparatus 7, and then be conveyed to a next process, for example, to a pressurizing apparatus of the battery module. The pallet conveying line 5 can convey both the empty pallet 6 and the pallet 6 carrying the second workpiece 20, so that rapid circulation of the pallet 6 can be achieved, and the production cost can be effectively reduced. In addition, the second workpiece 20 processed by the processing apparatus 8 is carried on the pallet 6, so that the second workpiece 20 can directly flow out of the processing apparatus 8 by using the pallet 6 without passing through the grasping and placing apparatus 3, which simplifies devices of the production line, reduces control steps, and further improves the production efficiency. Moreover, the processed second workpiece 20 is circulated via the pallet 6, which is beneficial to maintaining a shape of the processed second workpiece 20.

In the embodiments of this disclosure, the pallet conveying branch line 2, the workpiece conveying line 4, and the pallet conveying line 5 may be conveyor belts, for example, strip-shaped objects such as a belt, or may be a plurality of rollers arranged side by side, or may be a plurality of chains, speed chains, and the like. The pallet conveying branch line 2, the workpiece conveying line 4, and the pallet conveying line 5 may be driven by a driving apparatus. The driving apparatus includes, but is not limited to, a motor and a servo motor.

In a related art, the grasping and placing apparatus 3 configured to grasp the first workpiece 10 is usually placed on the ground, so utilization of the space on a side where the grasping and placing apparatus 3 is placed is limited, and additional space for the circulation of the pallet 6 is needed, which is not beneficial to improving the space utilization rate. Moreover, in the related art, there are the following cases: the empty pallet 6 coming from upstream along the pallet conveying line 5 enters the processing apparatus 8, and after processing is completed, the pallet 6 carrying the second workpiece 20 is discharged from the processing apparatus 8 to the pallet conveying line 5 in an original path and continues to flow downstream. In this case, the empty pallet 6 coming from the upstream needs to wait for the pallet 6 that carries the second workpiece 20 and is discharged from the processing apparatus 8 to flow away before continuing to flow towards the processing apparatus 8, and the pallet conveying line 5 needs to shut down to wait for a long time, which is not beneficial to accelerating the production speed.

However, the conveying system 100 according to the embodiment of this disclosure includes a reflow box 1 and a pallet conveying branch line 2 located between the workpiece conveying line 4 and the pallet conveying line 5, so that the pallet 6 does not need to be returned from the processing apparatus 8 to the pallet conveying line 5, but the pallet 6 bypasses, via the reflow box 1, into the pallet conveying line 5 without affecting feeding of the processing apparatus 8. There is no need to wait for the pallet 6 to reflow before a new empty pallet 6 flows into for placing the first workpiece 10, so that the speed of the production line can be effectively improved, the conveying efficiency can be accelerated, and the productivity can be improved, thereby helping to improve the production efficiency and reduce the production cost. Moreover, the reflow box 1 has an upper space 11 and a lower space 12. Thus, a grasping and placing apparatus 3 for grasping the first workpiece 10 from the workpiece conveying line 4 is arranged in the upper space 11 of the reflow box 1, and a reflow conveying apparatus 7 that enables the pallet 6 to reflow is arranged in the lower space 12, which makes full use of the space on the grasping and placing apparatus 3 side, so that the first workpiece 10 can be conveyed to the empty pallet 6 and the pallet 6 carrying the second workpiece 20 can reflow synchronously in a vertical direction in the space, which helps improve the space utilization rate.

In some embodiments of this disclosure, the pallet conveying branch line 2 conveys the pallet 6 in a first direction, and the reflow conveying apparatus 7 conveys the pallet 6 in a second direction intersecting with the first direction.

A direction for conveying the pallet 6 in the pallet conveying branch line 2 crosses a direction for conveying the pallet 6 in the reflow conveying apparatus 7, so that the conveying system 100 does not need to occupy too long space in the first direction, a layout of various modules of a component segment in the production line is not limited to a linear layout in a plane, but can be combined with layouts such as a U-turn, an upper layer, and a lower layer to improve the speed of a device and the layout flexibility, which helps improve the space utilization rate and the production efficiency, and is also beneficial to miniaturization and integration of the conveying system 100.

Certainly, it should be understood by those skilled in the art that in some other embodiments, the pallet conveying branch line 2 may alternatively convey the pallet 6 in the second direction, and the reflow conveying apparatus 7 may alternatively convey the pallet 6 in the first direction. In addition, in a case that enough space can be provided for the pallet conveying line 5 and the pallet conveying branch line 2, alternatively, the pallet conveying branch line 2 may convey the pallet 6 in the first direction, and the reflow conveying apparatus 7 may convey the pallet 6 in the first direction; alternatively, the pallet conveying branch line 2 may convey the pallet 6 in the second direction, and the reflow conveying apparatus 7 may convey the pallet 6 in the second direction. The conveying directions of the pallet conveying branch line 2 and the reflow conveying apparatus 7 are not specifically limited in the embodiments of this disclosure, and may be specifically set according to actual conveying requirements and conditions such as factory space.

In some embodiments of this disclosure, as shown in FIG. 1 and FIG. 2, the reflow box 1 includes a frame body 14 and a support surface 13 provided on the frame body 14. The grasping and placing apparatus 3 is arranged on the support surface 13 and located in the upper space 11 above the support surface 13. The reflow conveying apparatus 7 is arranged in the frame body 14 and located in the lower space 12 below the support surface 13.

As an example, the frame body 14 of the reflow box 1 includes a cross frame body extending in a first direction, a cross frame body extending in a second direction, a vertical frame body extending in a third direction, and the vertical frame body is connected to both ends of the outermost cross frame body respectively, thus defining the frame body 14 of the reflow box 1. Quantities of the cross frame bodies and the vertical frame bodies may be set according to a size of the frame body 14. The frame body 14 is configured to form a passage extending in the second direction between the cross frame body and the vertical frame body. The passage is configured to place the reflow conveying device 7 for conveying the pallet 6 to enable the pallet 6 to flow back.

In the embodiments of this disclosure, the support surface 13 is generally rectangular and laid above the cross frame body. In some other implementations, the support surface 13 may alternatively be any other suitable shape such as square and circular. As an example, the support surface 13 may completely cover all the cross frame bodies or only cover a part of the cross frame bodies. The shape and laying area of the support surface 13 are not specifically limited in the embodiments of this disclosure, as long as the support surface 13 can carry the grasping and placing apparatus 3.

The reflow box 1 may be divided into an upper space and a lower space by the frame body 14 and the support surface 13. The grasping and placing apparatus 3 is placed on the support surface 13 and located in the upper space, and the passage configured to place the reflow conveying apparatus 7 is located in the lower space below the support surface 13.

It should be understood by those skilled in the art that a quantity of the cross frame bodies is also not specifically limited in the embodiments of this disclosure, and may be specifically set according to the carrying capacity of the reflow box 1.

Therefore, the reflow box 1 can be defined by the frame body 14 and the support surface 13 with a simple structure, and the reflow box 1 can be divided into the upper space 11 and the lower space 12, so that the conveying system 100 can make full use of the upper space 11 and the lower space 12 of the reflow box 1 to achieve the conveying of the first workpiece 10 and the reflowing of the pallet 6 carrying the second workpiece 20, thereby improving the conveying efficiency and the space utilization rate, and effectively reducing the production cost.

In some embodiments of this disclosure, as shown in FIG. 3 and FIG. 4, the reflow conveying apparatus 7 includes an elevator 71 and a reflow conveying line 72. The elevator 71 can be driven by a jacking apparatus 711 to ascend or descend in a third direction intersecting both a first direction and a second direction. The elevator 71 is configured to transfer the pallet 6 from the pallet conveying branch line 2 to the reflow conveying line 72, and the pallet conveying branch line 2 is located above the reflow conveying line 72.

In the embodiments of this disclosure, as shown in FIG. 3, the reflow conveying line 72 is provided on a reflow base 74. The reflow conveying line 72 may be conveyor belts, for example, strip-shaped objects such as a belt, or may be a plurality of rollers arranged side by side, or may be a plurality of chains, speed chains, and the like. The reflow conveying line 72 may be driven by a driving apparatus. The driving apparatus includes, but is not limited to, a motor and a servo motor.

As shown in FIG. 3, the elevator 71 is arranged in the middle of the reflow conveying line 72 and may be ascended or descended relative to the reflow conveying line 72. When the elevator 71 is descended in place, the pallet 6 (for example, an edge of the pallet 6) carried on the elevator 71 is carried by the reflow conveying line 72 and is driven by the reflow conveying line 72 to travel in the second direction. One, two, or more elevators 71 may be provided. FIG. 3 shows two elevators 71. In addition, although not shown in the figures, an elevator is also arranged at a downstream end of the reflow conveying apparatus 7, and the pallet 6 smoothly flows into the pallet conveying line 5 from the reflow conveying apparatus 7 through this elevator. In addition, during ascending or descending of the elevator, the reflow conveying line 72 may pause transferring, and may continue transferring after the elevator is ascended in place.

As shown in FIG. 4, the elevator 71 includes a jacking apparatus 711 and a support plate 712. The support plate 712 is generally flat and is configured to carry the pallet 6. The jacking apparatus 711 is arranged below the support plate 712. As an example, the jacking apparatus 711 may be implemented by a jacking cylinder, for example. Specifically, a cylinder body of the jacking cylinder is fixed to an elevator mounting frame 713, and a cylinder rod retractable relative to the cylinder body is connected to the support plate 712, so that the support plate 712 can ascend or descend in a third direction through expansion and contraction of the cylinder rod.

An elevator support 714 is also arranged between the support plate 712 and the elevator mounting frame 713, and an elevator conveyor belt 715 is stretched on the elevator support 714. The elevator conveyor belt 715 can be driven by a driving shaft 716 to convey in the first direction. The pallet 6 may be conveyed in the first direction through friction between the elevator conveyor belt 715 and a bottom surface of the pallet 6, for example.

In the embodiments of this disclosure, there are two jacking apparatuses 711 in each elevator 71. In some other embodiments, there may be only one or there may be more (at least two) jacking apparatuses 711.

The reflow conveying apparatus 7 includes the elevator 71, so that the conveying system 100 can stably circulate the pallet 6 carrying the second workpiece 20 from the pallet conveying branch line 2 to the reflow conveying line 72 through the elevator 71, and the pallet 6 carrying the second workpiece 20 can be separated from the processing apparatus 8 during reflowing. Specifically, the pallet 6 is separated from the pallet conveying branch line 2, and reflowed to the pallet conveying line 5 via the reflow conveying line 72, thereby reducing undesirable situations such as moving and falling of the second workpiece 20 carried on the pallet due to accidental interference with the processing apparatus 8 during reflowing of the pallet 6.

As shown in FIG. 3, the reflow conveying apparatus 7 further includes a stopper 73. The stopper 73 is arranged on a reflow base 74, for example, on a side of the reflow base 74 that is far away from the pallet conveying branch line 2 in the first direction. Thus, when the pallet 6 is conveyed from the pallet conveying branch line 2 to the elevator 71, the pallet 6 can be stopped at a proper position on the elevator 71 by the stopper 73, which reduces the possibility of the pallet 6 falling from the elevator 71 and improves the reliability of the conveying system 100.

In the embodiments of this disclosure, there may be two stoppers 73 corresponding to each elevator 71. In some other embodiments, there may be only one or more (at least two) stoppers 73. The stopper 73 can be implemented, for example, in a form of a stopping cylinder, and certainly, in any other suitable form, such as a stopping block.

In addition, at least one buffer 75 may be arranged at an end of the elevator 71 (specifically, the reflow base 74) in the second direction (also referred to as an end on a downstream side). The buffer 75 is configured to buffer the pallet 6 conveyed along the reflow conveying line 72 to prevent undesirable situations such as that the pallet 6 slides out of the reflow conveying apparatus 7 and impact is excessive.

In some embodiments of this disclosure, the elevator 71 may include a synchronous elevator.

The synchronous elevator may be a commercial synchronous elevator. Through this synchronous elevator, even if the support plate 712 and the pallet 6 jacked up by the support plate 712 have large area, the pallet 6 can be smoothly descended, thereby reducing undesirable situations such as moving and deforming of the second workpiece 20 caused by the inclination of the pallet 6.

In some embodiments of this disclosure, intersecting includes vertical intersecting.

It is mentioned above that the first direction, the second direction, and the third direction are the directions that intersect in pairs, and the intersecting here includes a case of vertical intersecting. Therefore, the first workpiece 10 or the pallet 6 carrying the second workpiece 20 can be conveyed in three vertical directions in the space, which helps improve the conveying efficiency and the space utilization rate.

Certainly, it should be understood by those skilled in the art that in some other embodiments, intersecting of the first direction, the second direction, and the third direction is not limited to the vertical intersecting, and may be specifically set according to actual conveying conditions.

In some embodiments of this disclosure, as shown in FIG. 1 and FIG. 2, two pallet conveying branch lines 2 are provided. The two pallet conveying branch lines 2 are connected in parallel between the pallet conveying line 5 and the reflow conveying apparatus 7.

Thus, the pallet 6 can be conveyed by the two pallet conveying branch lines 2 together to flow through the processing apparatus 8. Two grasping and placing apparatuses 3 may alternatively be provided, and two elevators 71 of the reflow conveying apparatus 7 may alternatively be provided. The two grasping and placing apparatuses 3 can alternately place the first workpiece 10 onto the pallet 6 in one pallet conveying branch line 2, and after the first workpiece 10 is placed onto the pallet 6 in one pallet conveying branch line 2, the first workpiece 10 is placed onto the pallet in the other pallet conveying branch line 2. Such alternating can improve the processing speed of the production line. Certainly, two grasping and placing apparatuses 3 may respectively place the workpieces for the pallets 6 in one pallet conveying branch line 2. In addition, one elevator 71 corresponds to one pallet conveying branch line 2.

In some other implementations, only one or more (at least two) pallet conveying branch lines 2 may be provided, which may be specifically set according to an actual production size. A quantity of the pallet conveying branch lines 2 is not specifically limited in the embodiments of this disclosure.

In some embodiments of this disclosure, the grasping and placing apparatus 3 includes a manipulator. The manipulator is configured to grasp at least one first workpiece 10 from the workpiece conveying line 4 and place the at least one first workpiece 10 onto the pallet 6 in the pallet conveying branch line 2 in a specified orientation.

Therefore, the first workpiece 10 can be automatically placed in the empty pallet 6 in the pallet conveying branch line 2 through the manipulator, which reduces the labor costs and improves the automation degree of the conveying system.

The manipulator may grasp only one first workpiece 10 at one time, or may grasp two, three, or more first workpieces 10 at one time.

Certainly, it should be understood by those skilled in the art that when a plurality of pallet conveying branch lines 2 are provided, a plurality of manipulators are not necessarily provided, and the first workpieces 10 may be placed onto the pallets 6 in the plurality of pallet conveying branch lines 2 in turn by one manipulator or two manipulators.

In addition, the grasping and placing apparatus 3 is not necessarily a manipulator, but may be any other suitable grasping and placing apparatus, as long as the grasping and placing apparatus 3 can grasp at least one first workpiece 10 from the workpiece conveying line 4 and place the at least one first workpiece 10 onto the pallet 6 in the pallet conveying branch line 2 in a specified orientation.

In some embodiments of this disclosure, the processing apparatus 8 includes a stacking apparatus configured to align and stack the first workpieces 10 to form the second workpiece 20.

Therefore, the first workpieces 10 can be conveyed to the processing apparatus 8 through the conveying system 100, for aligning and stacking to form neatly arranged second workpieces 20, and the neatly arranged second workpieces 20 can be continuously conveyed to a next process through the conveying system 100, so that conveying and rapid alignment of the plurality of first workpieces 10 and subsequent circulation of the second workpieces 20 can be achieved in an automatic and simple manner, and the labor costs are reduced. Moreover, the conveying efficiency of the conveying system 100 is high, so that the stacking efficiency can be effectively improved.

It should be understood by those skilled in the art that, in some other embodiments, the processing apparatus 8 may alternatively be any other processing apparatus such as a pre-stacking apparatus and a pressurizing apparatus.

In some embodiments of this disclosure, the first workpiece 10 includes at least any one of a battery and a battery unit formed by combining at least two batteries, and the second workpiece 20 includes at least any one of a battery queue and a battery unit queue.

FIG. 5 illustrates a battery as a first workpiece 10. FIG. 6 illustrates a battery queue, specifically a single-row module, as a second workpiece 20.

Therefore, the conveying system 100 can convey the batteries or the battery units to the processing apparatus to stack the batteries and the battery units into a battery queue or a battery unit queue. Once stacking of the battery queue or the battery cell queue is completed, the battery queue or the battery unit queue can be quickly conveyed away by using the pallet to form a battery module in the subsequent process, so that the battery production speed can be accelerated and various types of battery modules can be continuously produced.

A second aspect of this disclosure provides a conveying method, which conveys and circulates workpieces by using a conveying system 100. The conveying system 100 includes a reflow box 1, a pallet conveying branch line 2, and a grasping and placing apparatus 3. The reflow box 1 is located between the workpiece conveying line 4 and the pallet conveying line 5 and is provided with a reflow conveying apparatus 7 in a lower space. The pallet conveying branch line 2 is connected with the pallet conveying line 5 and the reflow conveying apparatus 7, and the grasping and placing apparatus 3 is placed in an upper space of the reflow box 1.

As shown in FIG. 7, the conveying method includes the following steps.

S100: Enable a pallet to flow from a pallet conveying line into a pallet conveying branch line and to flow through a processing apparatus, where the processing apparatus is configured to process a first workpiece into a second workpiece.

S200: Grasp the first workpiece from a workpiece conveying line by using the grasping and placing apparatus and place the first workpiece onto the pallet in the pallet conveying branch line, for processing by the processing apparatus.

S300: Enable the pallet carrying the second workpiece to flow into a reflow conveying apparatus from the pallet conveying branch line.

S400: Enable the pallet by using the reflow conveying apparatus to reflow to the pallet conveying line.

Therefore, the workpiece can be conveyed and the pallet can be reflowed efficiently in a simple and automatic way by using the conveying system 100, which helps improve the conveying efficiency and the space utilization rate, so that the production efficiency can be effectively improved and the production cost can be reduced. Moreover, a process of transferring the pallet or the second workpiece by using a gripper and the like is omitted, which is beneficial to simplifying an action process.

In some embodiments of this disclosure, the reflow conveying apparatus 7 includes an elevator 71 and a reflow conveying line 72. The step of enabling the pallet 6 carrying the second workpiece 20 to flow into a reflow conveying apparatus 7 from the pallet conveying branch line 2, as shown in FIG. 8, includes the following steps.

S301: Jack up the elevator in a third direction.

S302: Enable a pallet carrying a second workpiece to flow out from a pallet conveying branch line and to be carried on the elevator in a jack-up state.

S303: Descend the elevator, so that the elevator transfers the pallet carrying the second workpiece to a reflow conveying line.

Therefore, the pallet 6 carrying the second workpiece 20 processed by the processing apparatus 8 can be transferred to the reflow conveying line 72 through the elevator 71, and then reflows into the pallet conveying line 5, which is convenient for the reflowed pallet 6 to be separated from the processing apparatus 8, and reduces undesirable situations such as moving and falling of the second workpiece 20 carried on the pallet 6 due to accidental interference with the processing apparatus 8 during reflowing of the pallet 6.

In some embodiments of this disclosure, the first workpiece 10 includes at least any one of a battery and a battery unit formed by combining at least two batteries. The second workpiece 20 includes at least any one of a battery queue and a battery unit queue. The processing apparatus 8 includes a stacking apparatus configured to align and stack the first workpieces 10 to form a second workpiece 20.

Therefore, the conveying method using the conveying system 100 can be used for conveying the batteries to the stacking apparatus, and after the batteries are aligned and stacked to form a neat battery queue, the batteries are circulated out of the stacking apparatus. Moreover, the batteries can be conveyed and the pallet carrying the stacked battery queue can be reflowed simultaneously, thereby improving the conveying efficiency and improving the production efficiency of grouping batteries.

A third aspect of this disclosure provides a battery production line. The battery production line includes a pallet conveying line 5, a workpiece conveying line 4, and the conveying system 100 according to the foregoing embodiments. The processing apparatus includes a stacking apparatus.

Therefore, the conveying connection between the pallet conveying line 5, the workpiece conveying line 4, and the processing apparatus 8 can be quickly implemented in a simple and automatic way, which helps improve the conveying efficiency, further improving the production efficiency of the stacking apparatus and even the whole battery production line, and improving the space utilization rate.

Specific examples of some embodiments of this disclosure are described below with reference to the accompanying drawings.

As a specific example, for example, a single-row battery is conveyed and a pallet carrying a single-row battery queue is reflowed. The conveying system 100 includes a reflow box 1, a pallet conveying branch line 2, and a grasping robot (a grasping and placing apparatus 3). The reflow box 1 is located between a transfer table (a module in the workpiece conveying line 4) and the pallet conveying branch line 2. The pallet conveying branch line 2 connects the pallet conveying line 5 and a pallet outflow line (the reflow conveying apparatus 7). The pallet conveying branch line 2 is configured to enable the pallet 6 conveyed by the pallet conveying line 5 to flow through the stacking apparatus (the processing apparatus 8). The grasping robot is placed in the upper space of the reflow box 1, and the pallet outflow line (the reflow conveying apparatus 7) is located in the lower space of the reflow box 1.

An empty pallet 6 flows into the stacking apparatus from the pallet conveying line 5 through the pallet conveying branch line 2, and the grabbing robot grasps batteries from the transfer table and places the batteries onto the pallet 6 in the stacking apparatus. The stacking apparatus aligns and stacks the batteries to form a neat battery queue. After the aligning and stacking are completed, the pallet 6 circulates with the battery queue from the pallet conveying branch line 2 to the pallet outflow line, and then reflows to the pallet conveying line 5.

Therefore, conveying of the battery and the reflow of the pallet 6 carrying the battery queue can be simultaneously with a simple structure and simple actions, thereby improving the speed of a production line, accelerating the conveying efficiency, improving the productivity, improving the production efficiency, and reducing the production cost. Moreover, the reflow box 1 has the upper space and the lower space, so that the battery can be conveyed and the pallet 6 carrying the battery queue can be circulated synchronously in a vertical direction in the space, which helps improve the space utilization rate.

Various embodiments above are only used to illustrate the technical scheme of this disclosure, but are not intended to limit this disclosure. Although this disclosure has been described in detail with reference to the foregoing embodiments, it should be understood by those skilled in the art that the technical scheme described in the various embodiments above can still be modified, or some or all of technical features in the embodiments can be replaced by equivalents. However, these modifications or substitutions do not make the essence of the corresponding technical schemes deviate from the scope of the technical schemes of various embodiments of this disclosure, but are included in the scope of this disclosure. In particular, as long as there is no structural conflict, various technical features mentioned in various embodiments can be combined in any manners.

### Industrial applicability

Embodiments of this disclosure provide a conveying system with high conveying efficiency and simple structure, a conveying method with high conveying efficiency, and a battery production line.

## Claims

1. A conveying system, configured to convey and circulate workpieces, wherein the conveying system comprises:
a reflow box, located between a workpiece conveying line and a pallet conveying line, wherein the reflow box has an upper space and a lower space, a reflow conveying apparatus configured to return a pallet to the pallet conveying line is provided in the lower space, the workpiece conveying line is configured to convey a first workpiece, the pallet conveying line is configured to convey the pallet, and the pallet is configured to carry a second workpiece;
a pallet conveying branch line, connecting the pallet conveying line and the reflow conveying apparatus, wherein the pallet conveying branch line is configured to enable the pallet conveyed by the pallet conveying line to flow through a processing apparatus, and the processing apparatus is configured to process the first workpiece into the second workpiece; and
a grasping and placing apparatus, placed in the upper space of the reflow box and configured to grasp the first workpiece from the workpiece conveying line and place the first workpiece onto the pallet in the pallet conveying branch line, for processing by the processing apparatus.

2. The conveying system according to claim 1, wherein
the pallet conveying branch line conveys the pallet in a first direction; and
the reflow conveying apparatus conveys the pallet in a second direction intersecting with the first direction.

3. The conveying system according to claim 1, wherein
the reflow box comprises a frame body and a support surface provided on the frame body, the grasping and placing apparatus is arranged on the support surface and is located in the upper space above the support surface, and the reflow conveying apparatus is arranged in the frame body and located in the lower space below the support surface.

4. The conveying system according to claim 1, wherein
the reflow conveying apparatus comprises an elevator and a reflow conveying line; and
the elevator is capable of being driven by a jacking apparatus to ascend or descend in a third direction intersecting with both the first direction and the second direction, the elevator is configured to transfer the pallet from the pallet conveying branch line to the reflow conveying line, and the pallet conveying branch line is located above the reflow conveying line.

5. The conveying system according to claim 2 or 4, wherein
the intersecting comprises vertical intersecting.

6. The conveying system according to claim 1, wherein
two pallet conveying branch lines are provided, and the two pallet conveying branch lines are connected in parallel between the pallet conveying line and the reflow conveying apparatus.

7. The conveying system according to claim 1, wherein
the grasping and placing apparatus comprises a manipulator, and the manipulator is configured to grasp at least one first workpiece from the workpiece conveying line and place the at least one first workpiece onto the pallet in the pallet conveying branch line in a specified orientation.

8. The conveying system according to claim 1, wherein
the processing apparatus comprises a stacking apparatus configured to align and stack the first workpieces to form the second workpiece.

9. The conveying system according to claim 8, wherein
the first workpiece comprises at least any one of a battery and a battery unit formed by combining at least two batteries, and the second workpiece comprises at least any one of a battery queue and a battery unit queue.

10. A conveying method, conveying and circulating workpieces by using a conveying system, wherein
the conveying system comprises a reflow box, a pallet conveying branch line, and a grasping and placing apparatus, the reflow box is located between a workpiece conveying line and a pallet conveying line and is provided with a reflow conveying apparatus in a lower space, the pallet conveying branch line connects the pallet conveying line and the reflow conveying apparatus, and the grasping and placing apparatus is placed in an upper space of the reflow box; and the conveying method comprises:
enabling a pallet to flow from the pallet conveying line into the pallet conveying branch line and to flow through a processing apparatus, wherein the processing apparatus is configured to process a first workpiece into a second workpiece;
grasping the first workpiece from the workpiece conveying line by using the grasping and placing apparatus and placing the first workpiece onto the pallet in the pallet conveying branch line, for processing by the processing apparatus;
enabling the pallet carrying the second workpiece to flow into the reflow conveying apparatus from the pallet conveying branch line; and
enabling the pallet by using the reflow conveying apparatus to reflow to the pallet conveying line.

11. The conveying method according to claim 10, wherein
the reflow conveying apparatus comprises an elevator and a reflow conveying line; and
the step of enabling the pallet carrying the second workpiece to flow into the reflow conveying apparatus from the pallet conveying branch line comprises:
jacking up the elevator in a third direction;
enabling the pallet carrying the second workpiece to flow out from the pallet conveying branch line and then to be carried on the elevator in a jack-up state; and
descending the elevator, so that the elevator transfers the pallet carrying the second workpiece to the reflow conveying line.

12. The conveying method according to claim 10 or 11, wherein
the first workpiece comprises at least any one of a battery and a battery unit formed by combining at least two batteries; the second workpiece comprises at least any one of a battery queue and a battery unit queue; and
the processing apparatus comprises a stacking apparatus configured to align and stack the first workpieces to form the second workpiece.

13. A battery production line, wherein the battery production line comprises:
a pallet conveying line, a workpiece conveying line, and the conveying system according to any one of claims 1 to 9.
